# EUROPÄISCHE PATENTSCHRIFT

(11) **EP 2 730 755 B1**
(45) Veröffentlichungstag und Bekanntmachung des Hinweises auf die Patenterteilung: **27.09.2017**
(21) Anmeldenummer: 13157647.2
(22) Anmeldetag: 04.03.2013
(51) Int. Cl.: F01K 3/18, F01K 3/00, F01K 1/04, F01K 25/00, F01C 1/22, F02G 5/02

(54) **Anlage zur Nutzung von Wärmeenergie**
Assembly for using thermal energy
Installation destinée à l'utilisation d'énergie thermique

(30) Priorität: 05.03.2012 DE 102012004158
(43) Veröffentlichungstag der Anmeldung: 14.05.2014
(73) Patentinhaber: Bomat Heiztechnik GmbH, 88662 Überlingen (DE)
(72) Erfinder: Bommer, Rolf, 88662 Überlingen (DE)
(74) Vertreter: Daub, Thomas

(56) Entgegenhaltungen:
- WO-A1-2009/121246
- AT-A4- 507 218
- DE-A1- 19 949 017
- DE-A1-102008 032 831
- GB-A- 2 423 555
- GB-A- 2 427 002
- US-A- 3 869 863
- US-A1- 2011 171 051

## Beschreibung

### Stand der Technik

Die Erfindung betrifft eine Anlage zur Nutzung von Wärmeenergie, insbesondere für eine Heizungsanlage eines Gebäudes.

Es sind bereits Anlagen zur Nutzung von Wärmeenergie bekannt. Ein Beispiel dafür ist zum Beispiel in dem Dokument AT507218A4 offenbart. Die Aufgabe der Erfindung besteht insbesondere darin, eine gattungsgemäße Anlage mit einem hohen Gesamtwirkungsgrad bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Anlage zur Nutzung von Wärmeenergie, mit einem Druckbehälter, mit einem Rotationskolbenmotor, der zumindest eine Arbeitskammer mit zwei Einlässen und zwei Auslässen aufweist, mit einer Überdruckleitung, die den Druckbehälter mit den Einlässen verbindet, und mit einem Generator, der an den Rotationskolbenmotor angebunden ist, vorgeschlagen. Dadurch kann eine Anlage bereitgestellt werden, bei der einfach und kostengünstig elektrische Energie aus Wärmeenergie gewonnen werden kann. Durch Weiterbildungen der Erfindung kann eine hohe Effizienz der Anlage erreicht werden. Insbesondere kann ein Anteil der Wärmeenergie, der nicht in elektrische Energie umgewandelt wird, effizient für eine Heizungsanlage eines Gebäudes oder zur Erwärmung von Brauchwasser verwendet werden. Durch die im Folgenden beschriebenen Ausgestaltungen des Rotationskolbenmotors, insbesondere durch eine ungesteuerte Anbindung des Rotationskolbenmotors an den Druckkessel, kann eine konstruktiv einfache Ausgestaltung erreicht werden. Unter einem "Rotationskolbenmotor" soll dabei insbesondere ein Motor verstanden werden, der einen Kolben aufweist, der in einem Betrieb eine Rotationsbewegung ausführt. Vorzugsweise ist der Rotationskolbenmotor als ein Wankelmotor ausgebildet, der für einen 2-Takt-Betrieb vorgesehen ist.

Vorzugsweise weist der Rotationskolbenmotor eine durchgehende Kurbelwelle auf und ist räumlich zwischen der Kältemaschine und dem Generator angeordnet. Dadurch können der Rotationskolbenmotor und die Kältemaschine gleichzeitig angetrieben werden, wodurch ein besonders hoher Wirkungsgrad erreicht werden kann. Durch eine Anordnung des Rotationskolbenmotors zwischen der Kältemaschine und dem Generator kann eine räumlich kompakte Ausgestaltung realisiert werden.

Weiter wird vorgeschlagen, dass die Anlage einen Abgaswärmetauscher aufweist, der thermisch mit der Kältemaschine gekoppelt ist. Dadurch kann eine Temperatur von Abgasen weiter gesenkt werden, wodurch insbesondere erreicht werden kann, dass die Abgase kondensieren. Dadurch können Schadstoffemissionen gesenkt werden. Durch die Kopplung der Kältemaschine mit dem Rotationskolbenmotor kann eine besonders hohe Effizienz erreicht werden, da auf einen separaten Antrieb für die Kältemaschine verzichtet werden kann. Unter einer "Kältemaschine" soll dabei insbesondere eine Maschine verstanden werden, die dazu vorgesehen ist, einem ersten Medium Wärmeenergie zu entziehen und diese einem zweiten Medium zuzuführen. Vorzugsweise ist der Abgaswärmetauscher mit einer kalten Seite der Kältemaschine verbunden, d.h. den Abgasen wird Wärmeenergie entzogen.

Vorzugsweise umfasst die Anlage weiter zumindest eine Leitung, die einen Kreislauf zur thermischen Anbindung des Abgaswärmetauschers an die Kältemaschine ausbildet. Dadurch kann der Abgaswärmetauscher einfach mit der Kältemaschine thermisch gekoppelt werden.

In einer besonders vorteilhaften Ausgestaltung umfasst die Anlage einen Energiespeicher und zumindest eine Leitung, die einen Kreislauf zur thermischen Anbindung des Energiespeichers an die Kältemaschine ausbildet. Dadurch kann die den Abgasen entzogene Wärmeenergie dem Energiespeicher zugeführt werden, wodurch die Wärmeenergie als Nutzenergie, beispielsweise für eine Gebäudeheizung oder zur Erwärmung von Brauchwasser, genutzt werden kann.

Vorzugsweise sind die Einlässe und die Auslässe des Rotationskolbenmotors ungesteuert. Dadurch kann eine konstruktiv besonders einfache und somit fehlerunanfällige Ausgestaltung erreicht werden. Unter "ungesteuert" soll dabei insbesondere verstanden werden, dass die Einlässe und die Auslässe jeweils an eine gemeinsame Leitung angebunden, wobei zwischen der Leitung und den mit der Leitung verbundenen Einlässen bzw. zwischen der Leitung und den mit der Leitung verbundenen Auslässen keine Ventile angeordnet sind. Ein- und Auslasszeiten sind dabei vorzugsweise lediglich durch eine Anordnung der Einlässe und der Auslässe sowie eine Überdeckung mittels eines Läufers des Rotationskolbenmotors definiert. Grundsätzlich ist aber auch eine Ausgestaltung mit Ventilen zur Steuerung von Ein- und/oder Auslasszeiten denkbar.

Ferner wird vorgeschlagen, dass die Anlage einen Wechselrichter aufweist, der dazu vorgesehen ist, eine von dem Generator erzeugte elektrische Leistung in einen Strom mit fester Spannung und fester Frequenz umzuwandeln. Dadurch kann auf eine aufwendige Steuerung des Rotationskolbenmotors zur Erzielung einer definierten Netzfrequenz verzichtet werden.

Weiter wird vorgeschlagen, dass die Anlage einen Wärmetauscher und eine Leitung, die den Wärmetauscher an die Auslässe des Rotationskolbenmotors anbindet, aufweist. Dadurch kann eine thermische Verbindung zwischen dem Wärmetauscher und dem Rotationskolbenmotor hergestellt werden, wodurch eine von dem Rotationskolbenmotor abgegebene Wärme als Nutzenergie verwendet werden kann und dadurch ein Energiespeicher mittels der Abgase erwärmt wird, ohne dass das Medium, das in dem Druckbehälter erwärmt wird, den Energiespeicher durchströmt. Durch eine Trennung mittels eines Wärmetauschers kann somit eine Betriebssicherheit erhöht werden. Unter einer "Leitung" soll dabei insbesondere eine Leitung zur Führung des flüssigen und/oder gasförmigen Mediums verstanden werden.

Vorzugsweise umfasst die Anlage weiter eine Leitung, die den Druckbehälter an den Wärmetauscher anbindet, und eine Kondensatpumpe, die in der Leitung angeordnet ist. Dadurch kann das Medium, dass den Rotationskolbenmotor und den Wärmetauscher durchströmt hat, wieder dem Druckbehälter zugeführt werden, wodurch ein Kreislauf ausgebildet werden kann, welcher den Druckbehälter, den Rotationskolbenmotor und den Wärmetauscher umfasst.

Außerdem wird vorgeschlagen, dass die Anlage zumindest eine Leitung aufweist, die einen Kreislauf zur thermischen Anbindung des Wärmetauschers an den Energiespeicher ausbildet. Durch einen Kreislauf, der den Energiespeicher erwärmt, von dem Kreislauf, in dem Rotationskolbenmotor angeordnet ist, getrennt werden.

Ferner wird ein Rotationskolbenmotor für eine erfindungsgemäße Anlage vorgeschlagen.

Vorzugsweise umfasst der Rotationskolbenmotor einen schmiermittelfrei gelagerten Läufer, wodurch sichergestellt werden kann, dass das Medium nicht durch ein separates Schmiermittel verschmutzt wird. Zudem kann ein Wartungsaufwand gesenkt werden, da ein regelmäßiger Wechsel von Schmiermittel entfallen kann. Unter "schmiermittelfrei" soll in diesem Zusammenhang insbesondere verstanden werden, dass auf ein zusätzliches Schmiermittel, wie beispielsweise Öl, verzichtet wird. Vorzugsweise dient das Medium, welches den Läufer antreibt, zur Schmierung.

Weiter wird vorgeschlagen, dass der Rotationskolbenmotor zumindest einen Einlass aufweist, der dazu vorgesehen ist, bei einem Füllungsgrad von höchstens 20 % durch den Läufer verschlossen zu werden. Dadurch kann ein hoher Wirkungsgrad bei gleichzeitig sicherer Füllung von Arbeitsvolumen des Rotationskolbenmotors erreicht werden. Unter einem "Füllungsgrad von höchstens 20 %" soll dabei insbesondere verstanden, dass das Arbeitsvolumen in einem aktuellen Betriebszustand eine Größe von höchstens 20 % einer maximalen Größe, die es während eines Betriebstakts annimmt, aufweist. Der Einlass wird somit verschlossen, bevor das Arbeitsvolumen sein maximales Volumen erreicht.

Außerdem wird vorgeschlagen, dass der Rotationskolbenmotor zumindest einen Auslass aufweist, der um höchstens 30 Grad gegenüber dem zumindest einen Einlass versetzt ist. Durch einen Abstand von höchstens 30 Grad können besonders vorteilhafte Ein- und/oder Auslasszeiten erreicht werden. Unter einem Winkel von 30 Grad soll dabei insbesondere ein auf eine Hauptrotationsachse bezogener Winkel verstanden werden. Unter einer "Hauptrotationsachse" soll insbesondere eine durch eine Kurbelwelle des Rotationskolbenmotors definierte Rotationsachse verstanden werden.

Besonders vorteilhaft weist der Rotationskolbenmotor zumindest eine Lauffläche auf, die zumindest teilweise aus Keramik besteht. Dadurch kann eine besonders vorteilhafte Lagerung realisiert werden, die insbesondere bei Verzicht auf ein zusätzliches Schmiermittel eine hohe Lebensdauer aufweist.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisch eine Darstellung einer Anlage zur Gewinnung von elektrischer Energie aus Wärmeenergie,
- Fig. 2: einen Rotationskolbenmotor der Anlage in einer schematischen Schnittdarstellung
- Fig. 3: eine Stellung eines Läufers des Rotationskolbenmotors zu einem Zeitpunkt, bei dem ein Einlass geöffnet wird,
- Fig. 4: eine Stellung des Läufers des Rotationskolbenmotors zu einem Zeitpunkt, bei dem der Einlass geschlossen wird,

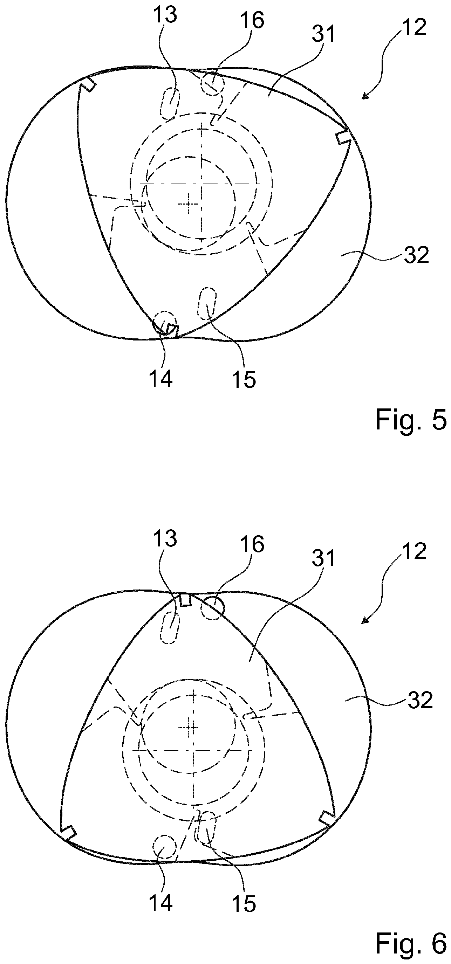

- Fig. 5: eine Stellung des Läufers des Rotationskolbenmotors zu einem Zeitpunkt, bei dem ein Auslass geöffnet wird,
- Fig. 6: eine Stellung eines Läufers des Rotationskolbenmotors zu einem Zeitpunkt, bei dem der Auslass geschlossen wird,

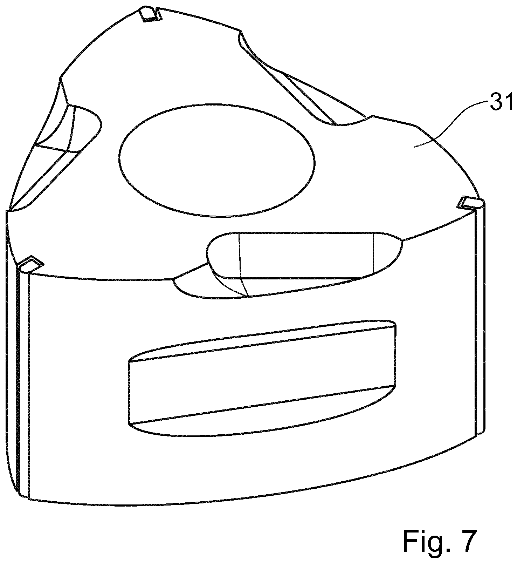

- Fig. 7: der Läufer in einer perspektivischen Darstellung, und

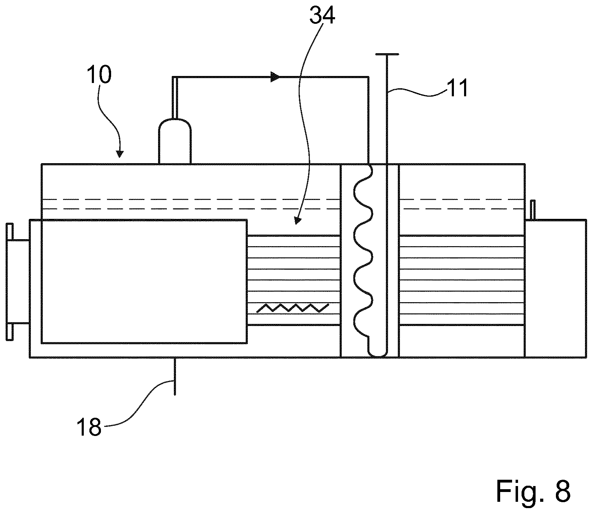

- Fig. 8: einen Druckbehälter der Anlage in einer Detaildarstellung.

### Beschreibung der Ausführungsbeispiele

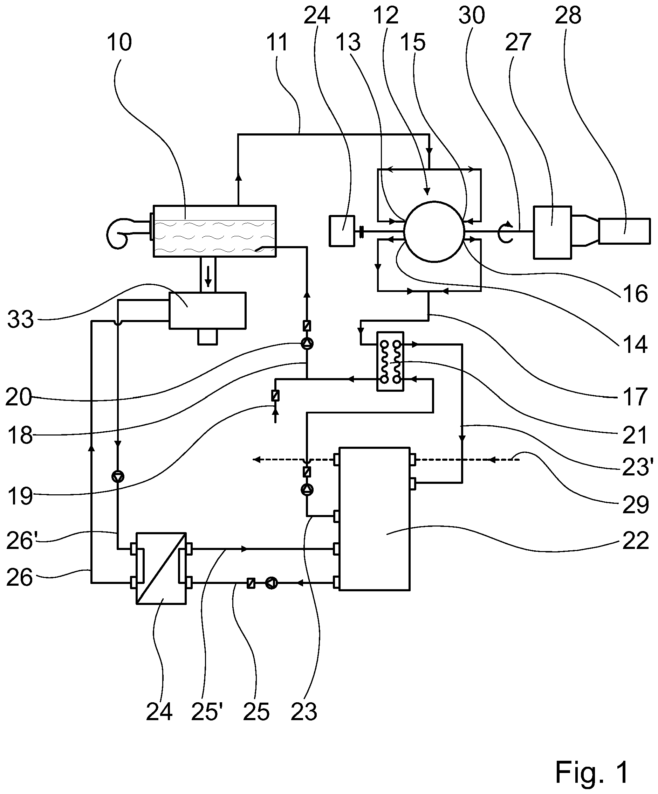

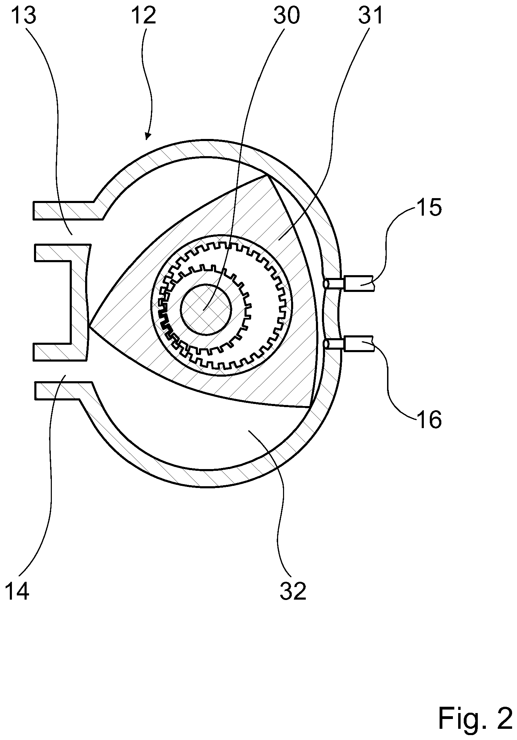

Die Figuren 1 und 2 zeigen eine Anlage zur Erzeugung von Strom, Wärme und Kälte. Die Anlage umfasst einen direkt oder indirekt beheizten Druckbehälter 10. Weiter umfasst die Anlage eine Überdruckleitung 11. Zudem umfasst die Anlage einen Rotationskolbenmotor 12 nach dem Prinzip Wankel. Der Rotationskolbenmotor 12 umfasst mindestens eine Arbeitskammer 32, mindestens einen in der Arbeitskammer 32 angeordneten Läufer 31, zwei in die Arbeitskammer 32 einmündende Einlässe 13, 15 und zwei aus der Arbeitskammer 32 herausführende Auslässe 14, 16. Zudem umfasst die Anlage einen Generator 27 und eine Kältemaschine 24. Der Rotationskolbenmotor 12 weist weiter eine durchgehende Kurbelwelle 30 für einen Antrieb des Generators 27 und/oder der Kältemaschine 24 auf. Die Einlasse 13, 15 sind ungesteuert, d.h. in der Überdruckleitung 11 oder an den Einlässen 13, 15 sind keine Ventile angeordnet, mittels denen Taktzeiten des Rotationskolbenmotors 12 gesteuert werden können. Die Auslässe 14, 16 sind ebenfalls ungesteuert. Weiter umfasst die Anlage einen Wärmetauscher 21 zur Kondensation des gasförmigen Mediums. Außerdem umfasst die Anlage eine Kondensatpumpe 20, um das kondensierte Medium wieder dem Druckbehälter 10 zuzuführen. Eine Leitung 18 bindet den Druckbehälter 10 an den Wärmetauscher 21 an. Die Kondensatpumpe 20 ist in der Leitung 18 angeordnet. Zudem weist die Anlage einen Speisewasseranschluss 19 auf, der in die Leitung 18 mündet, um den Druckbehälter 10 mit Wasser zu befüllen.

Der Rotationskolbenmotor 12 ist schmiermittelfrei. Insbesondere der Läufer 31 und die durch den Läufer 31 angetriebene Kurbelwelle 30 sind schmiermittelfrei gelagert. Der Läufer 31 und die Kurbelwelle 30 sind für eine Schmierung durch das Medium, welches in die Arbeitskammer 32 eingeleitet wird, vorgesehen. Ein Material, aus dem ein Gehäuse, das die Arbeitskammer 32 umschließt, gefertigt ist, ist an ein Material, aus dem der Läufer 31 gefertigt ist, angepasst. Das Gehäuse und der Läufer 31 sind dabei beispielsweise aus Metall oder Metalllegierungen gefertigt. Grundsätzlich können aber auch andere geeignete Materialien verwendet werden. Besonders vorteilhaft bilden der Läufer 31 und das Gehäuse an seiner die Arbeitskammer 32 begrenzenden Oberfläche jeweils Laufflächen aus, von denen zumindest eine aus Keramik oder einer Keramikverbindung besteht. Ein Material, aus dem der Läufer 31 und/oder das Gehäuse zumindest teilweise bestehen können, ist SiSiC.

Der Läufer 31 unterteilt die Arbeitskammer 32 in drei Arbeitsvolumen. Der Läufer 31 wird in einer exzentrischen Bewegung um eine Hauptrotationsachse geführt. Der Läufer 31 weist eine gebogen dreieckige Form auf. Durch die exzentrische Bewegung verändert sich bei einer Drehbewegung des Läufers 31 die Volumen der einzelnen Arbeitsvolumen zwischen einem Minimalwert und einem Maximalwert.

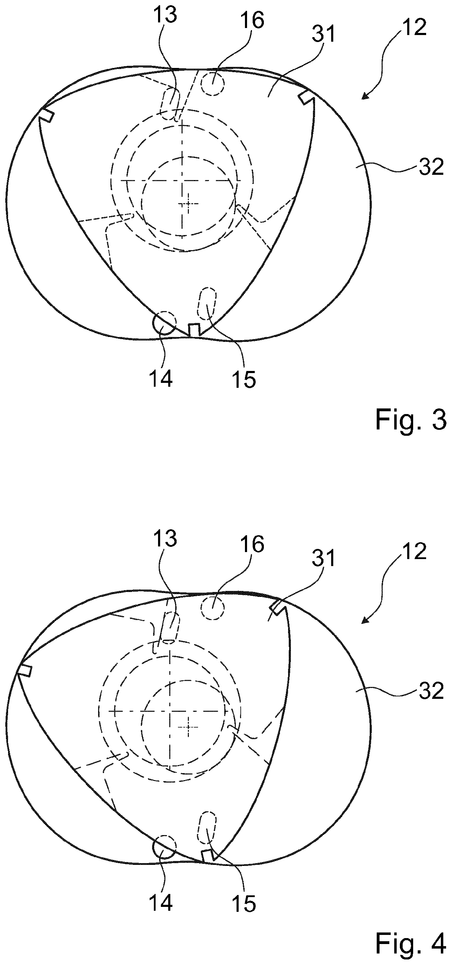

Die Einlässe 13, 15 und die Auslässe 14, 16 sind dazu vorgesehen, durch den Läufer 31 verschlossen zu werden. Die Einlässe 13, 15 werden geöffnet, wenn ein Füllungsgrad des entsprechende Arbeitsvolumens minimal oder geringfügig größer ist (vgl. Figur 3). Die Einlässe 13, 15 werden durch den Läufer 31 spätestens verschlossen, wenn der Füllungsgrad des Arbeitsvolumens 20 % beträgt (vgl. Figur 4). Die Auslässe 14, 16, werden geöffnet, wenn der Füllungsgrad des entsprechenden Arbeitsvolumens 100 % beträgt, d.h. maximal ist. Die Auslässe 14, 16 werden durch den Läufer 31 verschlossen, unmittelbar bevor die Einlässe 13, 15 geöffnet werden. Ein Winkel zwischen den Auslässen 14, 16 und dem in Rotationsrichtung nachfolgenden Einlass 13, 15 beträgt höchstens 30 Grad. Bezogen auf eine Mittelachse der Arbeitskammer 32 sind die jeweils benachbarten Einlässe 13, 15 und die Auslässe 14, 16 symmetrisch angeordnet. In dem dargestellten Ausführungsbeispiel verschließt der Läufer 31 den entsprechenden Einlass 13, 15, wenn der Füllungsrad des zugehörigen Arbeitsvolumens zwischen 5 % und 10 % liegt. Die Einlässe 13, 15 und der jeweils benachbarte Auslass 14, 16 sind dabei um ca. 20 Grad gegeneinander versetzt. Zur Nutzung eines Restdrucks in dem Arbeitsvolumen können der der jeweils benachbarte Einlass 13, 15 und Auslass 14, 16 über eine nicht näher dargestellte Bypassleitung jeweils direkt miteinander verbunden werden.

Außerdem umfasst die Anlage die Kältemaschine 24, die zur Abkühlung von Verbrennungsgasen und zur Kondensation der Abgase vorgesehen ist. Die Kältemaschine 24 ist dadurch als eine Wärmepumpe vorgesehen, durch welche eine weitere Absenkung einer Temperatur der Abgase erreicht werden kann. Grundsätzlich kann auf die Kältemaschine 24 auch verzichtet werden.

Der Druckbehälter 10 ist mit einem Medium gefüllt, das in einem Betrieb teilweise flüssig und teilweise gasförmig ist. Vorzugsweise ist der Druckbehälter 10 in dem Betrieb teilweise mit Wasser und teilweise mit Wasserdampf gefüllt. Die Überdruckleitung 11 führt das gasförmige Medium zu den Einlässen 13, 15 des Rotationskolbenmotors 12. Der Rotationskolbenmotor 12 wird durch den Überdruck angetrieben, der an den Einlassen 13, 15 anliegt. Durch den Rotationskolbenmotor 12 wird eine Druckdifferenz zwischen den Einlässen 13, 15 und den Auslässen 14, 16 in eine kinetische Energie umgewandelt, die an der Kurbelwelle 30 abgegriffen werden kann. An die Kurbelwelle 30 sind der Generator 27 und die Kältemaschine 24 angebunden. Insbesondere der Generator 27 ist dabei direkt, d.h. ohne ein Getriebe, an die Kurbelwelle 30 angebunden.

Weiter weist die Anlage einen Wechselrichter 28 auf. Der Wechselrichter 28 wandelt die von dem Generator 27 erzeugte Leistung in einen elektrischen Strom mit definierter Spannung und Frequenz um, unabhängig davon, mit welcher Drehzahl der Generator 27 betrieben wird. Die Drehzahl des Generators 27 entspricht stets einer Drehzahl des Rotationskolbenmotors 12, die wiederum von der abgegriffenen Leistung und der Druckdifferenz zwischen den Einlässen 13, 15 und den Auslässen 14, 16 abhängig ist. Der von dem Wechselrichter 28 abgegebene Strom weist beispielsweise eine Frequenz von 50 Hz und eine Spannung von 230 V auf.

Das aus dem Rotationskolbenmotor 12 austretende Medium, vorzugsweise Wasserdampf, ist immer noch gasförmig. Ein Druck an den Auslässen 14, 16 ist dabei geringer als ein Druck an den Einlässen 13, 15. Auch eine Temperatur des gasförmigen Mediums ist an den Auslässen 14, 16 geringer als an den Einlässen 13, 15. In dem Wärmetauscher 21 wird die Temperatur des gasförmigen Mediums weiter verringert, bis es kondensiert. Bei Verwendung von Wasserdampf wird dieser auf ca. 90-95° C abgekühlt und somit zu Wasser verflüssigt. Das kondensierte Medium wird über die Kondensatpumpe 20 wieder dem Druckbehälter 10 zugeführt. Die Überdruckleitung 11, die Leitung 17 und die Leitung 18 bilden einen Kreislauf für den Rotationskolbenmotor 12 aus.

Die Anlage umfasst als thermohydraulische Weiche einen Energiespeicher 22, an den beispielsweise ein Brauchwassernetz eines Gebäudes oder ein Heizungssystem 29 eines Gebäudes angebunden werden kann. Eine Wärmeenergie, die dem Medium in dem Wärmetauscher 21 entzogen wird, wird über Leitungen 23, 23' dem Energiespeicher 22 zugeführt. Die Leitungen 23, 23' bilden einen geschlossenen Kreislauf aus.

Der Druckbehälter 10 wird in dem dargestellten Ausführungsbeispiel über eine nicht näher dargestellte Therme beheizt, die Wärme mittels Verbrennung eines Brennstoffes erzeugt. Der Druckbehälter 10 kann grundsätzlich auch an eine Solarthermieanlage oder eine andere Wärmequelle angeschlossen werden. Die Therme in dem dargestellten Ausführungsbeispiel kann für Gas, Öl oder Holz als Brennstoffe ausgelegt sein.

Zur Erwärmung des Druckbehälters 10 wird ein heißes Abgas durch einen Wärmetauscher 34 in dem Druckbehälter 10 hindurchgeführt. Die Anlage weist weiter einen Abgaswärmetauscher 33 auf, der in Bezug auf eine Strömung des Abgases nach dem Druckbehälter 10 angeordnet ist. Das aus dem direkt oder indirekt beheizten Druckbehälter 10 austretende Abgas wird in dem Abgaswärmetauscher 33 abgekühlt. Eine dabei gewonnene Wärmeenergie wird über Leitungen 26, 26' abgeführt. Die Leitungen 26, 26' bilden einen geschlossenen Kreislauf aus.

Die in dem Abgaswärmetauscher 33 gewonnene Wärmeenergie kann direkt dem Energiespeicher 22 zugeführt werden. In dem dargestellten Ausführungsbeispiel wird die Wärmeenergie der Kältemaschine 24 zugeführt. Die Kältemaschine 24, die an den Rotationskolbenmotor 12 angebunden ist, wirkt als eine Wärmepumpe. Der Abgaswärmetauscher 33 kann somit das Abgas auf eine tiefe Temperatur abkühlen, wodurch dem Abgas im Vergleich zu einem Betrieb ohne die Kältemaschine 24 eine wesentlich höhere Energiemenge entzogen wird. Die mittels der Kältemaschine 24 gewonnene Wärmeenergie wird über Leitungen 25, 25' dem Energiespeicher 22 zugeführt. Die Leitungen 25, 25' bilden einen geschlossenen Kreislauf aus.

Der Druckbehälter weist den Wärmetauscher 34 auf, der dazu vorgesehen ist, den Wasserdampf vor einer Zuführung zu dem Rotationskolbenmotor zu überhitzen. Der Wärmetauscher 34 weist zwei Stufen auf. Die erste Stufe des Wärmetauschers 34 dient zur Erwärmung des in dem Druckbehälter bevorrateten flüssigen Mediums, vorzugsweise Wasser. In der ersten Stufe wird das flüssige Medium verdampft. Anschließend wird das Medium in gasförmigem Zustand durch die zweite Stufe des Wärmetauschers 34 hindurchgeführt. Nach der ersten Stufe weist das Medium, vorzugsweise Wasserdampf, eine Temperatur von ca. 180°C auf. Nach der zweiten Stufe weist das Medium eine Temperatur von 250°C bis 400°C auf. Zur Einstellung der Temperatur des Wasserdampfs weist der Wärmetauscher Turbulatoren 35 auf, mittels denen eine Strömungsgeschwindigkeit der Abgase in dem Wärmetauscher 34 eingestellt werden kann. Durch eine Veränderung der Strömungsgeschwindigkeit der Abgase kann die Temperatur des Mediums nach der zweiten Stufe eingestellt werden.

### Bezugszeichen

- 10: Druckbehälter
- 11: Überdruckleitung
- 12: Rotationskolbenmotor
- 13: Einlass
- 14: Auslass
- 15: Einlass
- 16: Auslass
- 17: Leitung
- 18: Leitung
- 19: Speisewasseranschluss
- 20: Kondensatpumpe
- 21: Wärmetauscher
- 22: Energiespeicher
- 23: Leitung
- 23': Leitung
- 24: Kältemaschine
- 25: Leitung
- 25': Leitung
- 26: Leitung
- 26': Leitung
- 27: Generator
- 28: Wechselrichter
- 29: Heizungssystem
- 30: Kurbelwelle
- 31: Läufer
- 32: Arbeitskammer
- 33: Abgaswärmetauscher
- 34: Wärmetauscher
- 35: Turbulatoren

## Patentansprüche

1. Anlage zur Nutzung von Wärmeenergie, mit einem Druckbehälter (10), mit einem Rotationskolbenmotor (12), mit einer Überdruckleitung (11) und mit einem an den Rotationskolbenmotor (12) angebundenen Generator (27) und/oder einer an den Rotationskolbenmotor (12) angebundene Kältemaschine (24),
**dadurch gekennzeichnet, dass**
der Rotationskolbenmotor (12) zumindest eine Arbeitskammer (32) mit zwei Einlässen (13, 15) und zwei Auslässen (14, 16) aufweist und die Überdruckleitung (11) den Druckbehälter (10) mit den Einlässen (13, 15) verbindet.

2. Anlage nach Anspruch 1,
**gekennzeichnet durch**
den Generator (27) und die Kältemaschine (24), wobei der Rotationskolbenmotor (12) eine durchgehende Kurbelwelle (30) aufweist und räumlich zwischen der Kältemaschine (24) und dem Generator (27) angeordnet ist.

3. Anlage nach Anspruch 2,
**gekennzeichnet durch**
einen Abgaswärmetauscher (33), der thermisch mit der Kältemaschine (24) gekoppelt ist.

4. Anlage nach Anspruch 3,
**gekennzeichnet durch**
zumindest eine Leitung (26, 26'), die einen Kreislauf zur thermischen Anbindung des Abgaswärmetauschers (33) an die Kältemaschine (24) ausbildet.

5. Anlage nach einem der vorhergehenden Ansprüche,
**gekennzeichnet durch**
einen Energiespeicher (22) und zumindest eine Leitung (25, 25'), die einen Kreislauf zur thermischen Anbindung des Energiespeichers (22) an die Kältemaschine (24) ausbildet.

6. Anlage nach einem der vorhergehenden Ansprüche,
**dadurch gekennzeichnet, dass**
die Einlässe (13, 15) und die Auslässe (14, 16) des Rotationskolbenmotors (12) ungesteuert sind.

7. Anlage nach einem der vorhergehenden Ansprüche,
**gekennzeichnet durch**
einen Wechselrichter (28), der dazu vorgesehen ist, eine von dem Generator (27) erzeugte elektrische Leistung in einen Strom mit fester Spannung und fester Frequenz umzuwandeln.

8. Anlage nach einem der vorhergehenden Ansprüche,
**gekennzeichnet durch**
einen Wärmetauscher (21) und eine Leitung (17), die den Wärmetauscher (21) an die Auslässe (14, 16) des Rotationskolbenmotors (12) anbindet.

9. Anlage nach Anspruch 8,
**gekennzeichnet durch**
eine Leitung (18), die den Druckbehälter (10) an den Wärmetauscher (21) anbindet, und eine Kondensatpumpe (20), die in der Leitung (18) angeordnet ist.

10. Anlage nach Anspruch 8 oder 9,
**gekennzeichnet durch**
zumindest eine Leitung (23, 23'), die einen Kreislauf zur thermischen Anbindung des Wärmetauschers (21) an den Energiespeicher (22) ausbildet.

11. Anlage nach einem der vorhergehenden Ansprüche,
**dadurch gekennzeichnet, dass**
der Rotationskolbenmotor (12) einen schmiermittelfrei gelagerten Läufer (31) aufweist.

12. Anlage nach Anspruch 11,
**dadurch gekennzeichnet, dass**
zumindest einer der Einlässe (13, 15) dazu vorgesehen ist, bei einem Füllungsgrad von höchstens 20 % durch den Läufer (31) verschlossen zu werden.

13. Anlage nach Anspruch 12,
**dadurch gekennzeichnet, dass**
zumindest einer der Auslässe (14, 16) um höchstens 30 Grad gegenüber dem zumindest einen Einlass (13, 15) versetzt ist.

14. Anlage nach einem der vorhergehenden Ansprüche,
**dadurch gekennzeichnet, dass**
der Rotationskolbenmotor (12) zumindest eine Lauffläche aufweist, die zumindest teilweise aus Keramik besteht.

## Claims

1. Installation for using thermal energy, with a pressure vessel (10), with a rotary-piston motor (12), with an overpressure line (11) and with a generator (27) connected to the rotary-piston motor (12) and/or with a refrigerating machine (24) connected to the rotary-piston motor (12),
**characterised in that**
the rotary-piston motor (12) comprises at least one operative chamber (32) with two inlets (13, 15) and two outlets (14, 16), and the overpressure line (11) connects the pressure vessel (10) to the inlets (13, 15).

2. Installation according to claim 1,
**characterised by**
the generator (27) and the refrigerating machine (24), wherein the rotary-piston motor (12) comprises a contiguous crankshaft (30) and is spatially arranged between the refrigerating machine (24) and the generator (27).

3. Installation according to claim 2,
**characterised by**
an exhaust gas heat exchanger (33), which is thermally coupled with the refrigerating machine (24).

4. Installation according to claim 3,
**characterised by**
at least one line (26, 26') implementing a circuit to thermally connect the exhaust gas heat exchanger (33) to the refrigerating machine (24).

5. Installation according to one of the preceding claims,
**characterised by**
an energy reservoir (22) and at least one line (25, 25') implementing a circuit to thermally connect the energy reservoir (22) to the refrigerating machine (24).

6. Installation according to one of the preceding claims,
**characterised in that**
the inlets (13, 15) and the outlets (14, 16) of the rotary-piston motor (12) are uncontrolled.

7. Installation according to one of the preceding claims,
**characterised by**
an inverter (28) configured to convert an electric power produced by the generator (27) into a current having a fixed voltage and a fixed frequency.

8. Installation according to one of the preceding claims,
**characterised by**
a heat exchanger (21) and a line (17) connecting the heat exchanger (21) to the outlets (14, 16) of the rotary-piston motor (12).

9. Installation according to claim 8,
**characterised by**
a line (18) connecting the pressure vessel (10) to the heat exchanger (21), and by a condensate pump (20) arranged in the line (18).

10. Installation according to claim 8 or 9,
**characterised by**
at least one line (23, 23') implementing a circuit to thermally connect the heat exchanger (21) to the energy reservoir (22).

11. Installation according to one of the preceding claims,
**characterised in that**
the rotary-piston motor (12) comprises a runner (31) which is supported in lubricant-free fashion.

12. Installation according to claim 11,
**characterised in that**
at least one of the inlets (13, 15) is configured to be closed by the runner (31) at a filling level of maximally 20 %.

13. Installation according to claim 12,
**characterised in that**
at least one of the outlets (14, 16) is offset from the at least one inlet (13, 15) by maximally 30 degrees.

14. Installation according to one of the preceding claims,
**characterised in that**
the rotary-piston motor (12) comprises at least one running surface that is at least partly made of a ceramic material.

## Revendications

1. Installation destinée à l'utilisation d'énergie thermique, avec une cuve à pression (10), avec un moteur à piston rotatif (12), avec une conduite à surpression (11) et avec un générateur (27) raccordé au moteur à piston rotatif (12) et/ou avec une machine réfrigérante (24) raccordée au moteur à piston rotatif (12),
**caractérisée en ce que**
le moteur à piston rotatif (12) comporte au moins une chambre opérative (32) avec deux entrées (13, 15) et deux sorties (14, 16) et la conduite à surpression (11) raccord la cuve à pression (10) raccorde la cuve à pression (10) aux entrées (13, 15).

2. Installation selon la revendication 1,
**caractérisée par**
le générateur (27) et la machine réfrigérante (24), le moteur à piston rotatif (12) comportant un vilebrequin (30) continu et étant disposé spatialement entre la machine réfrigérante (24) et le générateur (27).

3. Installation selon la revendication 2,
**caractérisée par**
un échangeur de chaleur pour les gaz d'échappement (33), lequel est couplé thermiquement avec la machine réfrigérante (24).

4. Installation selon la revendication 3,
**caractérisée par**
au moins une conduite (26, 26') implémentant un circuit pour raccorder thermiquement l'échangeur de chaleur pour les gaz d'échappement (33) à la machine réfrigérante (24).

5. Installation selon l'une quelconque des revendications précédentes,
**caractérisée par**
un réservoir d'énergie (22) et au moins une conduite (25, 25') implémentant un circuit pour raccorder thermiquement le réservoir d'énergie (22) à la machine réfrigérante (24).

6. Installation selon l'une quelconque des revendications précédentes,
**caractérisée en ce que**
les entrées (13, 15) et les sorties (14, 16) du moteur à piston rotatif (12) sont in-controlées.

7. Installation selon l'une quelconque des revendications précédentes,
**caractérisée par**
un onduleur (28) prévu à convertir une puissance électrique produite par le générateur (27) en un courant ayant un voltage fixe et une fréquence fixe.

8. Installation selon l'une quelconque des revendications précédentes,
**caractérisée par**
un échangeur de chaleur (21) et une conduite (17) raccordant l'échangeur de chaleur (21) aux sorties (14, 16) du moteur à piston rotatif (12).

9. Installation selon la revendication 8,
**caractérisée par**
une conduite (18) raccordant la cuve à pression (10) à l'échangeur de chaleur (21), et une pompe à condensat (20) disposée dans la conduite (18).

10. Installation selon la revendication 8 ou 9,
**caractérisée par**
au moins une conduite (23, 23') implémentant un circuit pour raccorder thermiquement l'échangeur de chaleur (21) au réservoir d'énergie (22).

11. Installation selon l'une quelconque des revendications précédentes,
**caractérisée en ce que**
le moteur à piston rotatif (12) comporte un rotor (31) supporté sans lubrifiant.

12. Installation selon la revendication 11,
**caractérisée en ce qu'**
au moins une des entrées (13, 15) est prévue à être fermée par le rotor (31) à un degré de remplissage de 20 % au maximum.

13. Installation selon la revendication 12,
**caractérisée en ce qu'**
au moins une des sorties (14, 16) est décalée relativement à l'au moins une entrée (13, 15) par 30 degrés au maximum.

14. Installation selon l'une quelconque des revendications précédentes,
**caractérisée en ce que**
le moteur à piston rotatif (12) comporte au moins une surface de roulement implémentée au moins partiellement de céramique.
